# EUROPEAN PATENT APPLICATION

(11) **EP 2 365 691 A1**
(43) Date of publication of application: **14.09.2011**
(21) Application number: 11160848.5
(22) Date of filing: 22.03.2005
(51) Int. Cl.: H04N 5/355, H04N 5/359, H04N 5/365

(54) **Extended dynamic range image method**

(30) Priority: 25.03.2004 US 809073
(62) Divisional of application: 05726033.3
(71) Applicant: Eastman Kodak Company, Rochester, New York 14650 (US)
(72) Inventor: Parks, Christopher, Rochester New York 14650 (US)
(74) Representative: Weber, Etienne Nicolas

(57) **Abstract**

A method for correcting a fixed pattern noise associated with an image sensor having two or more pixels and a charge control structure for changing a charge capacity of the two or more pixels during an integration time, the method comprising: setting the charge capacity of each pixel to substantially zero at a beginning of an integration time; changing the charge capacity of each pixels throughout the integration time such that substantially no portion of the pixel photo response curve is substantially linear; and multiplying each pixel by a constant value determined for that pixel to compensate for variations of the charge capacity.

## Description

### FIELD OF THE INVENTION

The invention relates generally to the field of image sensors having a plurality of pixels that varies its charge capacity during integration for an improved extended dynamic range.

### BACKGROUND OF THE INVENTION

When looking at the real world, the eyes see a wide range of light levels. It is expected that one will see the same range when a picture of the same scene is viewed. It is often forgotten that, as one looks at the real world, the eyes are constantly adjusting the light intensity with an iris as we look from bright to dark areas. When outside in bright sunlight, it doesn't matter how hard the eyes try; the bright sunlight prevents the eyes from seeing into shadows. Yet, a photograph is expected to show details in the shadows. However, paper can't possibly reflect enough light to equal the range of light levels generated by the sun. The solution to the limited range of the display, either paper or a display that emits light, is to enhance the dark portions of the image and compress the intensity range of the bright portions.

When an image-sensing device captures a scene, it typically outputs a signal level that is linearly proportional to the light levels of the image scene. The dark portions of the image are enhanced and the bright portions of the image are compressed at the image display output or at some intermediate step between image capture and display.

The dynamic range of the image sensor is defined as the maximum signal level divided by the dark noise signal. If the output must be linear, then the only way to increase the dynamic range is to increase the maximum signal level or decrease the dark noise level. This becomes very difficult if the dynamic range needs to be increased by 8 times or more. This would be the equivalent of increasing the bit depth of a digital display by 3 more bits.

The alternative is to expand the dark signal and compress the bright signal at the point of image capture on the image-sensing device. For example, in an image-sensing device comprised of an array of charge collecting photosensitive elements, such as a photo-capacitors or photo-diodes, altering the charge capacity while the photosensitive element is integrating photo-generated charge may extend the dynamic range of the photosensitive element. This technique is well known as first described in US Patent 3,919,587 where the surface channel CCD charge capacity is varied during image exposure. The technique applies equally well to vertical overflow drain type charge capacity control structures on CMOS imagers (US Patent 4,626,915) and the obvious application to a vertical overflow drain interline CCD imager (US Patent 4,926,247). Lateral type overflow drain charge capacity control will also work on interline and CMOS imagers similar to that described in US Patent 5,276,520. Patents describing other variations include US Patents 4,598,414; 5,589,880; 5,602,407; 6,008,486; 6,040,570; 3,953,733; 4,377,755; 4,584,606; 5,295,001; 5,406,391; 6,101,294; and 6,188,433 B1.

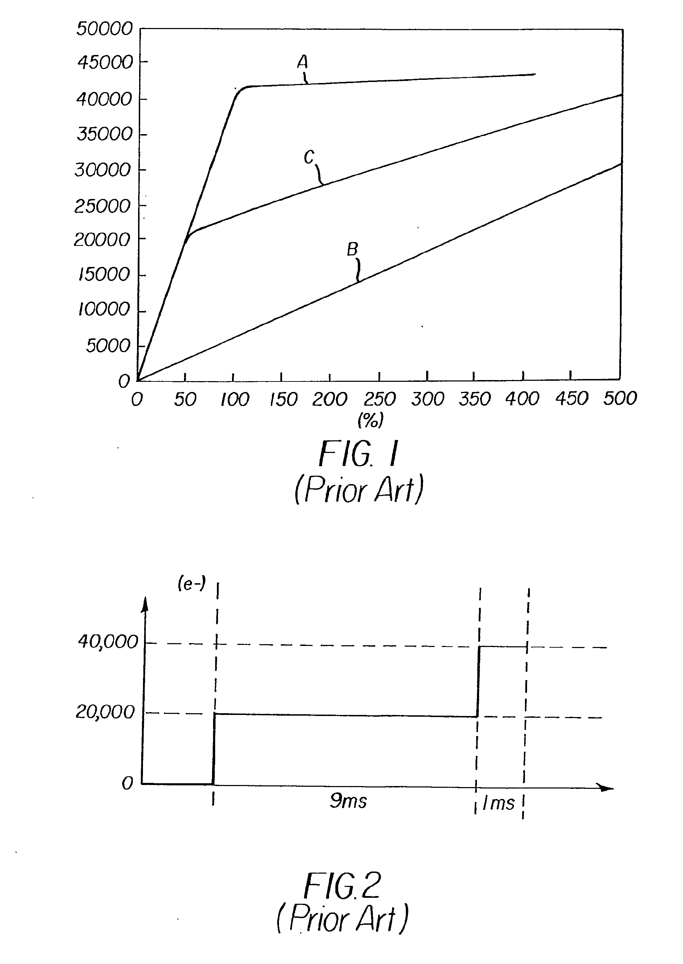

For the sake of clarity, only a vertical overflow drain (VOD) type charge capacity control structure will be discussed. It is widely known that the same principles also apply to lateral charge capacity control structures. The fundamental problem of dynamic range is for each photon that crosses the surface of the silicon photodiode one electron is generated. This is a linear process. Referring to Fig. 1 curve A, the exposure time is long to obtain large signal levels at low light, but it saturates quickly at higher light levels. To obtain good images at high light levels, a short exposure time must be used (represented by curve B). The shortcoming with curve B is at low light levels. At a light level of 25%, the short exposure curve B only has 2,000 electrons while the long exposure curve A would have produced 10,000 electrons. Curve B has a much poorer signal to noise ratio.

An image sensor that has a photo response curve represented by curve C would be much better. At low light levels, it responds to light like the long exposure. But if the pixel is exposed to brighter light, the pixel becomes less sensitive to light above 20,000 electrons. Curve C is the combination of a long exposure and a short exposure.

If two exposures are taken, for example, a combination of one long exposure for 10 ms and one short exposure for 1 ms is taken. An extended dynamic range image could be constructed from the two exposures by replacing saturated pixels in the 10 ms image with unsaturated pixels in the 1 ms image. This is actually an old technique with a significant shortcoming. Two pictures cannot be read out of an image sensor in a short period of time. A sensor with millions of pixels may take 200 ms or more to read out. This requires too much time between exposures. Objects in the image may move in 200 ms so the two exposures will not overlap in space.

Instead of doing a 10 ms exposure followed by a second 1 ms exposure, do one exposure while changing the charge capacity in two steps. Referring to Fig. 2, at the end of 9 ms use, the electronic shuttering capability of the image sensor to restrict the charge capacity to 20,000 electrons or less. Normally the electronic shutter is used to completely empty the photodiodes of all electrons. There is nothing that prevents turning on the electronic shutter partially to restrict any saturated photodiode to 20,000 electrons. The partial electronic shutter does not affect any photodiode containing less than 20,000 electrons. After restricting the charge capacity to 20,000 for 9 ms, increase the charge capacity to 40,000 electrons and wait 1 ms to add another short exposure on top of what is already in the photodiode. Now each photodiode was exposed to light for a total of 10 ms.

The end result is an image sensor with photo-response curve C (Fig. 1). It is as sensitive to low light levels as is the long exposure curve A. It also is sensitive to light levels more than 400% beyond the point were the long exposure saturates. Four times higher light sensitivity adds another 2-bits on the dynamic range.

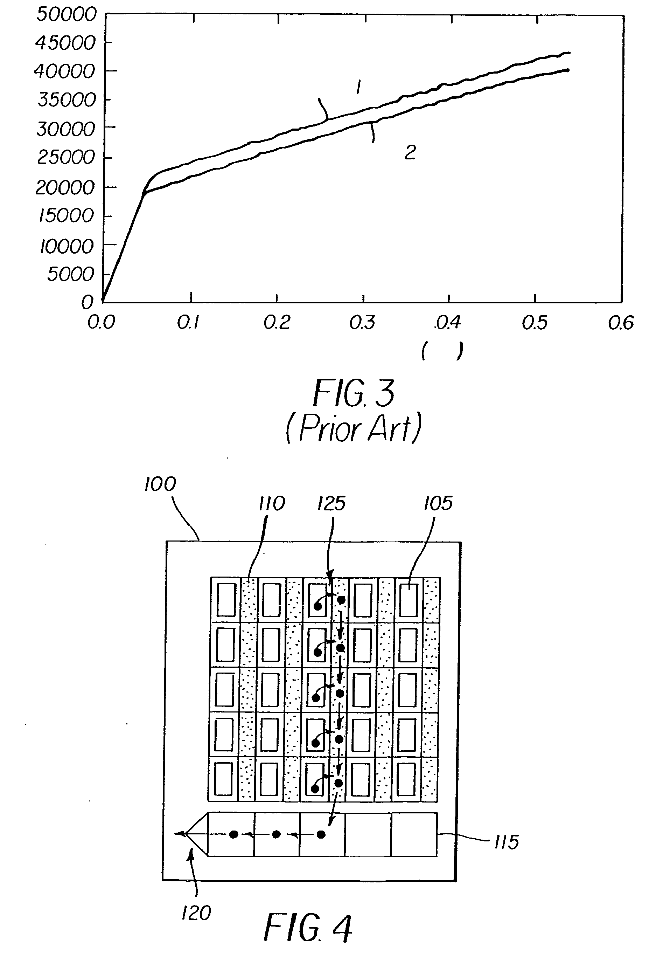

Despite the literature on the subject of extending an image sensor dynamic range, the method is not widely used. There is a fundamental drawback to the method. The method of controlling the charge capacity of a photosensitive element is very non-uniform from one element (or pixel) to the next. Some applied voltage generally controls the charge capacity. For any given control voltage, the charge capacity of each pixel may vary by 10% or more. That variation manifests itself in the image as objectionable fixed pattern noise. Referring to Fig. 3, the photo response curves of two individual pixels are shown. At low light levels, the pixels have identical signals for a given illumination. However, once the curve changes slope the pixels no longer have equal photo response. In the earlier example, this originates from the first 9 ms of the exposure where the charge capacity is restricted to 20,000 electrons. The drawback is that, for a given charge capacity control voltage, the two pixels do not have exactly the same charge capacity. The different photo response at high levels leads to poor image quality (fixed pattern noise). The fixed pattern noise can be corrected, but it requires a digital camera to store detailed information about the photo response of each pixel. Information about the light level at which the slope changes, the high light level offset, and the transition region between the two slopes must be stored. This would consume a large amount of memory and is thus the primary reason why this technique is not widely used.

Consequently, the prior art provides no simple method of eliminating that fixed pattern noise.

### SUMMARY OF THE INVENTION

The present invention is directed to overcoming one or more of the problems set forth above. Briefly summarized, the present invention resides in a method for correcting a fixed pattern noise associated with an image sensor having two or more pixels according to claim 1. Specific embodiments of the present invention are defined in the dependent claims.

These and other aspects, objects, features and advantages of the present invention will be more clearly understood and appreciated from a review of the following detailed description of the preferred embodiments and appended claims, and by reference to the accompanying drawings.

### Advantageous Effect Of The Invention

The present invention includes the advantage of providing a simplistic method for correcting fixed pattern noise of an apparatus for extending the dynamic range of image sensors.

### BRIEF DESCRIPTION OF THE DRAWINGS

Fig. 1 is a prior art graph illustrating light level versus signal;
Fig. 2 is a prior art graph illustrating charge capacity versus time;
Fig. 3 is prior art graph illustrating photo response of two neighboring pixels;
Fig. 4 is a top view of the image sensor of the present invention;
Fig. 5 is a side view of the image sensor of Fig. 4;
Figs. 6a-6d are illustrations of the potential energy profile extending from the silicon photodiode surface down through the vertical overflow drain and into the substrate;
Fig. 7 is a graph illustrating light level versus signal for a plurality of exposure times;
Fig. 8 is a graph illustrating charge capacity versus time for the response curves of Fig. 7;
Fig. 9 graph illustrating light level versus signal generated by varying the amplitude of the partial electronic shutter;
Fig. 10 is a graph illustrating charge capacity versus time for the response curves of Fig. 9;
Fig. 11 is a graph illustrating light level versus signal in which a representative portion of the signals have three slopes;
Fig. 12 is a graph illustrating charge capacity versus time for the response curves of Fig. 11;
Fig. 13 is a graph illustrating light versus signal for varied charge capacity throughout the integration period;
Fig. 14 is a graph illustrating capacity versus time for the response curves of Fig. 13;
Fig. 15 is a graph illustrating light level versus signal level for improving dynamic range;
Fig. 16 is a capacity versus time for the response curves of Fig. 15;
Fig. 17 is a graph of simulating continuous charge capacity change by a series of pulses over time;
Fig. 18 is a graph of two adjacent pixels having the charge varied continuously over the integration time;
Fig. 19 is the photo response of the pixels of Fig. 18 in which pixel 1 is divided by pixel 2; and
Fig. 20 is a digital camera illustrating a typical commercial embodiment for the image sensors of the present invention.

### DETAILED DESCRIPTION OF THE INVENTION

Referring to Fig. 4, there is shown the basic structure of an interline CCD image sensor 100. It consists of an array of photodiodes 105 with a vertical CCD shift register 110 adjacent to each column of photodiodes 105. The image readout sequence begins by transferring photo-generated charge in the photodiodes 105 across a transfer region 125 to the vertical CCD 110. Then the charge in the vertical CCD in all columns is transferred in parallel one row at a time into the horizontal CCD 115. Each row transferred into the horizontal CCD 115 is then serially transferred one pixel at a time to an output charge sensing node 120.

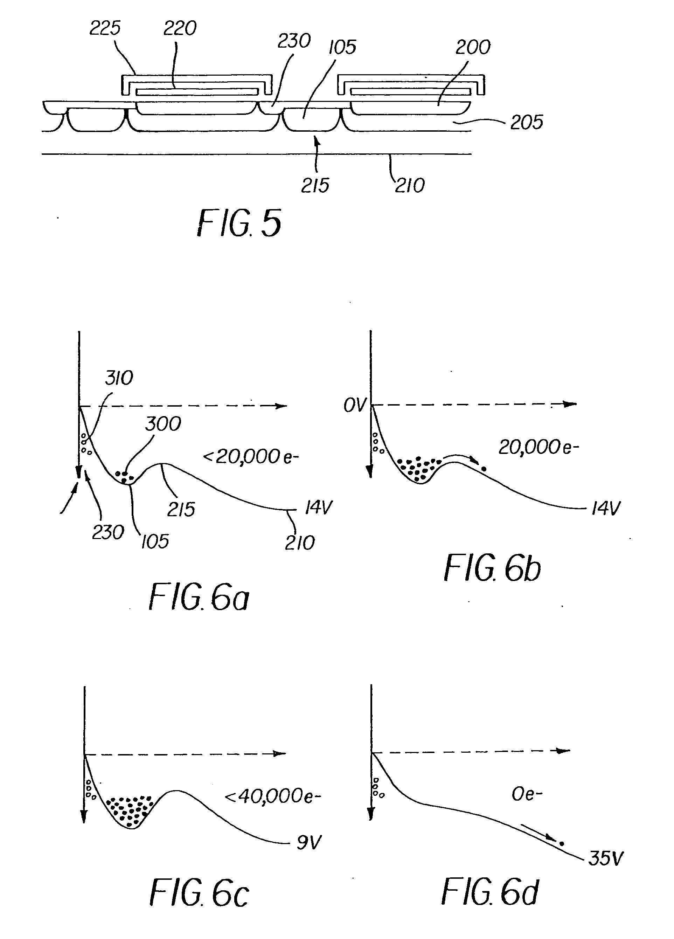

A detailed cross-sectional view extending horizontally through a photodiode 105 and vertical CCD 110 is shown in Fig. 5. In the preferred embodiment, the entire structure is built on an n-type silicon substrate 210. In the substrate 210, a p-well 205 is formed to isolate the vertical CCD n-type channel 200 from the substrate 210. The flow of electrons through the vertical CCD channel 200 is controlled by polysilicon gates 220. The vertical CCD channel 200 is also covered by an opaque light shield 225 to prevent the photo-generation of electrons directly in the vertical CCD channel 200. There are openings in the light shield 225 to allow photons to penetrate the silicon surface and generate electrons in the photodiode 105. The photodiode 105 is separated from the substrate 210 by a lightly doped p-type vertical overflow drain 215. The surface potential of the photodiode 105 is held at 0 V by a p+ pinning layer 230 which also acts as a separator between the photodiode 105 and the vertical CCD channel 200.

The charge capacity of the photodiode 105 is controlled by a voltage applied to the substrate 210. The control voltage on the substrate 210 effects the potential energy barrier between the photodiode 105 and substrate 210 as shown in Figs. 6a-6d. In Fig. 6a, there are holes 310 (positive charge carriers) in the surface pinning layer 230 which hold the surface potential at 0 V. The doping levels in the silicon are varied with depth to create a potential energy well at the photodiode 105 where photo-generated electrons 300 may collect. Fig. 6a shows a case where the substrate 210 voltage is 14 V which sets the photodiode 105 charge capacity to 20,000 electrons or less. Fig. 6b shows what happens when the photodiode fills with charge, the excess electrons spill over the vertical overflow drain 215 and are collected by the substrate 210. The charge capacity of the photodiode is regulated by the substrate voltage as shown in Fig. 6c where the substrate voltage is lowered to 9 V thus increasing the photodiode capacity to 40,000 electrons. Fig. 6d shows how the substrate voltage may be increased high enough to completely remove the vertical overflow drain barrier and reduce the photodiode capacity to zero. This is commonly used to implement electronic shuttering in interline CCD's.

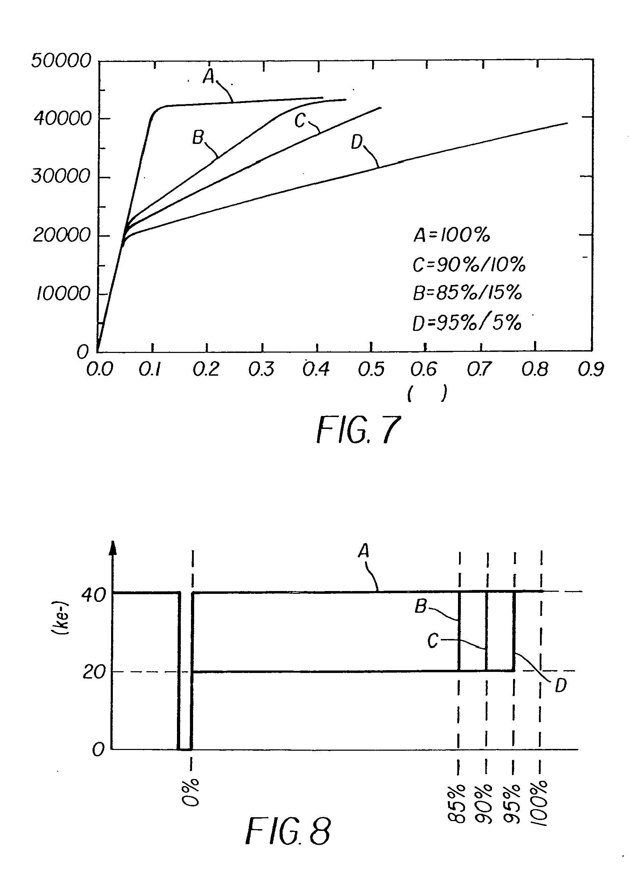

Now it will be described how the ability to control the photodiode charge capacity leads to a non-linear photo-response. The two-slope linearity curve C of Fig. 7 is easiest to understand. Adjusting the charge capacity of the photodiode customizes the photo-response curve. The slope of the photo-response at low light levels is determined by the quantum efficiency of the image sensor. The slope at high light levels is set by the ratio of time before and after the photodiode charge capacity is reset back to 20,000 electrons.

Reducing the charge capacity of the photodiode to 20,000 electrons at 90% of the exposure time generates photo-response curve C in Fig. 7. The slope of the photo-response curve is 90% / 10% = 9 times less than the slope of the full 100% exposure (curve A in Fig. 7). Curves B and D illustrate reducing the charge capacity of the photodiode to 20,000 electrons respectively at 95 % and 85 % of the exposure time. Fig. 8 shows the charge capacity of the photodiode vs. time for each curve in Fig. 7.

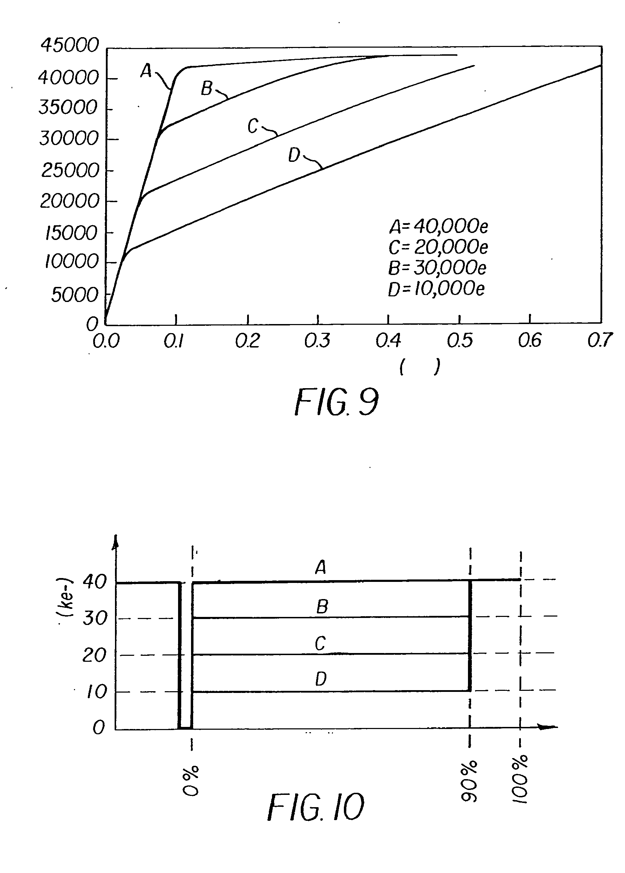

The signal level where the slope of the photo-response curve changes is set by what value the photodiode charge capacity is reset. For each curve in Fig. 9, the partial electronic shutter is done at the same time so they all have the same slope for the high light levels (except for curve A where the charge capacity is not changed during the exposure). Fig. 10 shows the charge capacity of the photodiode vs. time for each curve in Fig. 9.

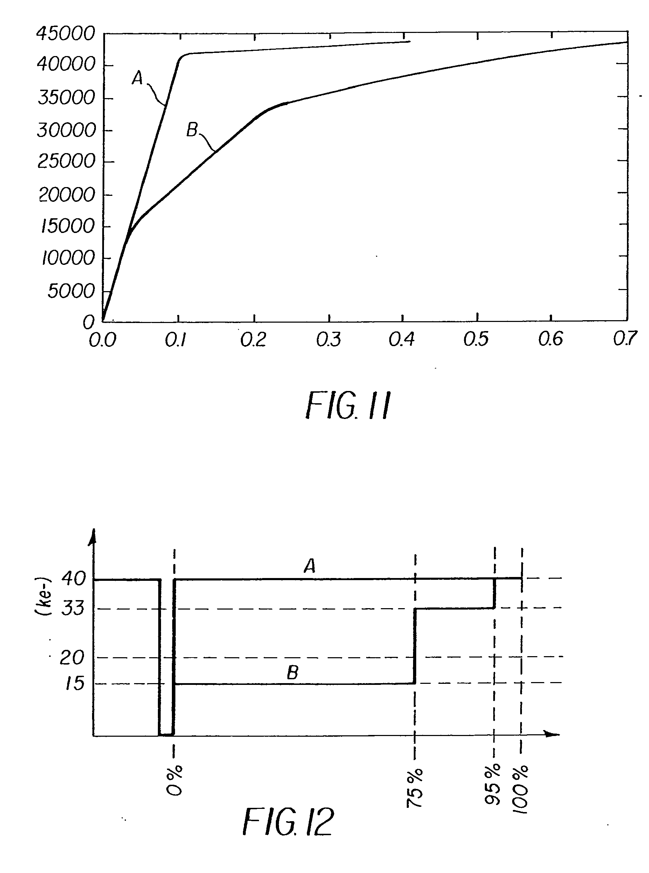

Fig. 11 shows the photo-response is not limited to just two slopes as in Figs. 7 and 9. The points at which the photo-response changes slope in Fig. 11 (curve B) is determined by the amplitude of the charge capacity steps in Fig. 12 (curve B), for example, three steps for curve B. The timing of the charge capacity changes determines the slopes of the photo-response curve.

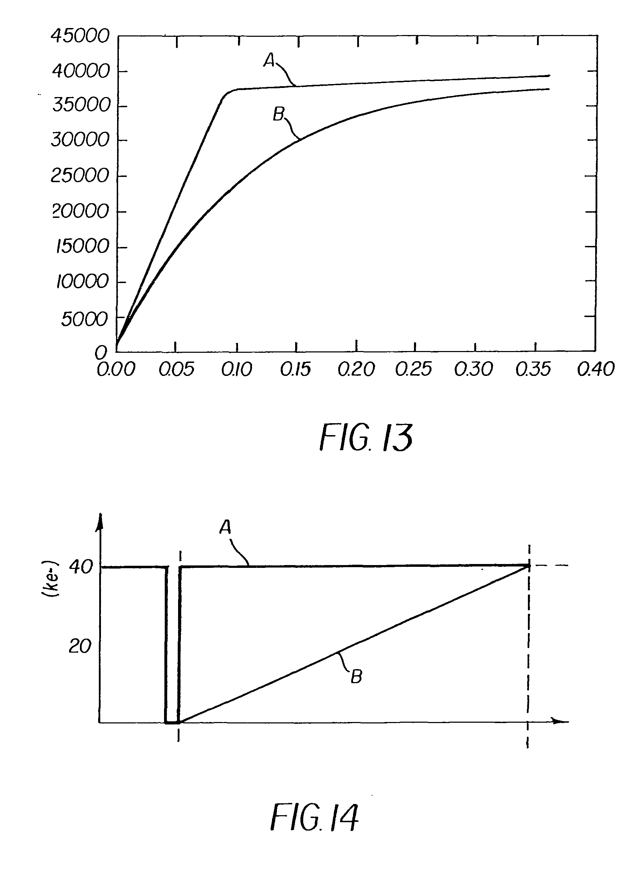

If additional charge capacity changes are added, it is possible to obtain the continuous photo-response curve B of Fig. 13 versus curve A where the charge capacity is constant throughout the exposure. The charge capacity changes in Fig. 14 may occur many times, or continuously, throughout the exposure time to produce a smooth non-linear photo-response curve.

The nonlinear photo-response curve of Fig. 13 looks somewhat like the gamma correction used to display images. But it still cuts back too much signal at low light levels and it only extends the high light sensitivity by 2.5x. The solution is to not use the Fig. 14 straight-line linear ramp of the charge capacity.

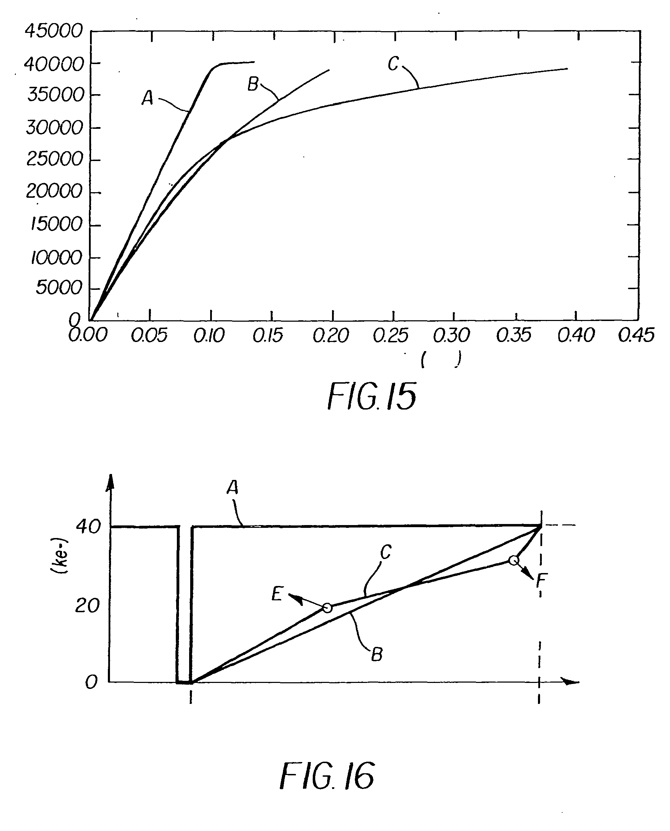

The improved photo-response curve C in Fig. 15 now has 4 times the dynamic range of curve A. It was obtained by modifying the linear straight-line ramp of the charge capacity curve B in Fig. 16. Curve C initially increases the charge capacity faster in the early part of the exposure. This improves the low light level photo-response. Then nearly halfway through the exposure, the charge capacity increases more slowly until the last 5% of the exposure when it rapidly rises to 40,000 electrons. This extends the high light sensitivity. To adjust the low or high light sensitivity of the photo-response, move the two nodes on curve C in the directions are moved indicated by the arrows E and F.

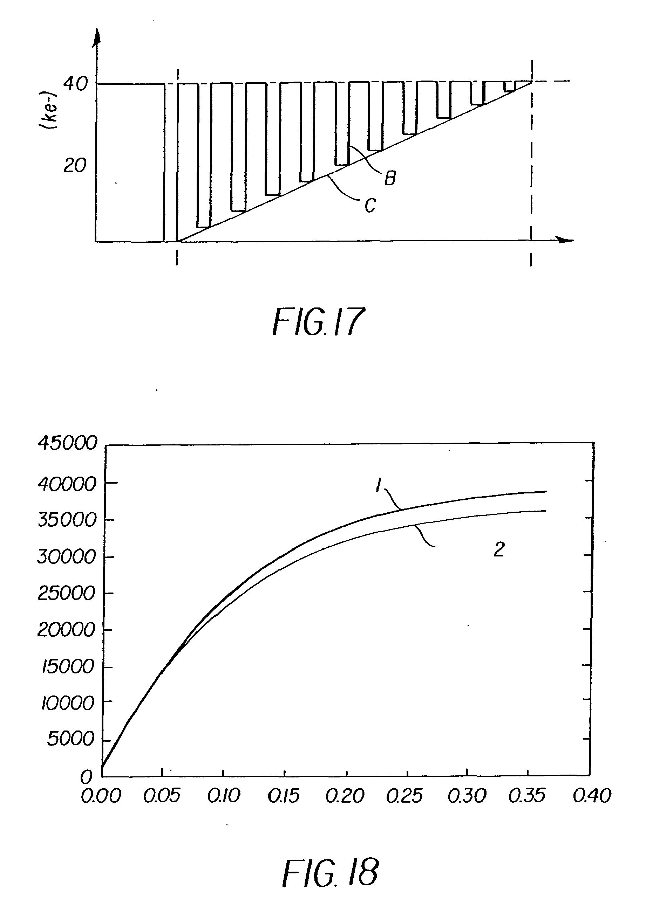

Any photo-response curve may be created subject to the following constraints:
● 1^{st} derivative is positive
● 2^{nd} derivative is less than or equal to zero
● the photo-response is less than when the charge capacity is held constant. Instead of continuously varying the charge capacity as in Fig. 17 curve C, the charge capacity may be pulsed in time as in curve B of Fig. 17. The envelope of the pulse amplitudes follows curve C. Pulsing the charge capacity may be of advantage in some digital camera designs. This is because the substrate voltage required to change the charge capacity of an interline CCD may have to rise above 15 V. Voltages above 15 V generally are more difficult to generate. Instead, charge pumping circuits may be used to derive higher voltages from 15 V or smaller power supply. The most simple charge pumping circuits can only produce higher voltages for very short periods of time. Therefore the pulsed charge capacity technique shown in Fig. 17 would be used.

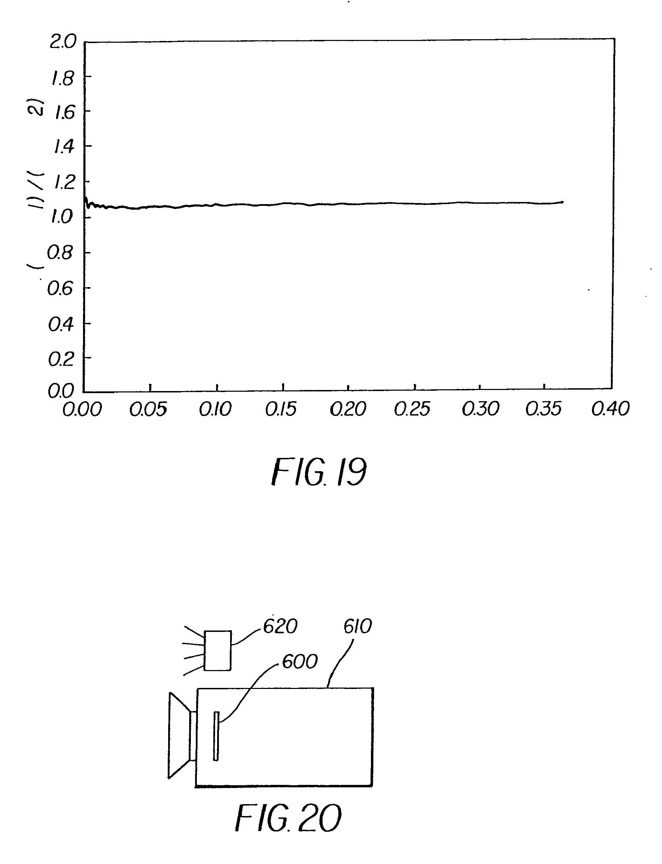

The shortcoming of photo-response uniformity is now considered. Thus far it has been shown that a photodiode will have a non-linear photo-response if its charge capacity is varied continuously during the image exposure. Fig. 18 shows the photo-response curve of two adjacent pixels. In this case, the charge capacity is varied continuously throughout the entire exposure as in Fig. 16. The two adjacent pixels have slightly different photo-responses. However, the photo-response curves differ by only a single constant multiplying term. Fig. 19 shows the ratio of the photo-response of pixel 1 divided by the photo-response of pixel 2. This ratio is substantially constant at all light levels. This means the photo-response non-uniformities of all pixels in an image due to overflow drain variations may be corrected by storing one number per pixel. That number is a gain correction term. The gain correction is constant for all light levels and all exposure times. This greatly simplifies the image processing in the digital camera.

The use of a continuously variable charge capacity to enable a single term photo-response non-uniformity correction has not been demonstrated by any prior art regarding extended dynamic range.

The invention has been described within the context of an interline CCD image sensor. When an interline CCD is operated in video mode an image is collected in the photodiodes while the previous image is read out of the vertical CCD. The presence of a charge packet in the vertical CCD will effect the charge capacity of the photodiode adjacent to the charge packet. This modulation of the charge capacity will then alter the photo-response curve generated by varying the charge capacity of the photodiodes. The solution to this problem is to not start the integration of the next image in the photodiodes until the previous image has been read out of the vertical CCD.

One skilled in the art of image sensor design will immediately recognize that the invention may also be applied to image sensors of the full frame CCD type with a controllable lateral or vertical overflow drain charge capacity control structure. Also, it is obvious that a CMOS type imager employing photodiodes or photocapacitors may also use a vertical or lateral overflow drain charge capacity control structure to implement the invention. There are many varieties of image sensors, but they all contain the basic structure of a photo-generated charge collection site with a charge capacity control structure.

Fig. 20 shows a digital camera 610 using an image sensor 600 operated in extended dynamic range mode with fixed pattern noise correction. The digital camera stores the gain correction terms internally. Once the gain correction terms have been applied to the pixels to reduce fixed pattern noise, further image processing may take place. If the image sensor in the camera has a color filter array, such as the Bayer color filter, then the color filter processing generally needs to be done on linear data. An internal look-up table may be used to translate the non-linear photo-response to a linear photo-response curve. The look-up table would be generated and stored in the camera to match the non-linear photo-response curve. The digital camera may also optionally use an attached or detached flash illumination unit 620.

The light exposure of the image sensor may also be synchronized by the camera to a flash lamp illumination light source 620. Such flash lamp sources have short illumination times. To obtain a non-linear photo-response curve with a flash lamp, the charge capacity would be varied during the time period which the flash lamp emits light.

In the case of a digital still camera, a shutter would be used to block light from the image sensor while the image sensor is reading out the image. The shutter may also be synchronized to the external flash lamp if the flash lamp illumination is required.

### Itemized subject matter

1. An image sensor comprising:
   A plurality of pixels in which at least two or more pixels have a charge control structure used to change charge capacity during the integration time; wherein at substantially a beginning of an exposure time the charge capacity is altered to substantially zero by either the charge control structure or a read-out mechanism and the charge capacity is changed by the charge control structure throughout the exposure time such that substantially no portion of the pixel photo response curve is substantially linear.
2. The image sensor as in item 1, wherein multiplying each pixel by a substantially constant value compensates variations of the charge capacity.
3. The image sensor as in item 1, wherein the charge capacity control structure is pulsed so as to substantially reproduce the photo response curve.
4. The image sensor as in item 2, wherein the charge capacity control structure is pulsed so as to substantially reproduce the photo response curve.
5. The image sensor as in item 2, wherein a look up table is used to translate the photo response curve into linear space for color filter processing.
6. The image sensor as in item 2, wherein multiplying gain change values are stored in a digital camera.
7. The image sensor as in item 1, wherein the capacity control structure is adjusted to produce the desired photo response curve substantially entirely within the duration of a flash lamp exposure.
8. The image sensor as in item 1, wherein the image sensor is disposed in a digital camera that includes a mechanism to switch between linear and nonlinear photo response.
9. The image sensor as in item 1, wherein the image sensor is an interline CCD in which images are substantially read out of a vertical CCD before starting the integration in photodiodes of any next images.
10. A camera comprising:
   an image sensor comprising a plurality of pixels in which at least two or more pixels have a charge control structure used to change charge capacity during the integration time; wherein at substantially a beginning of an exposure time the charge capacity is altered to substantially zero by either the charge control structure or a read-out mechanism and the charge capacity is changed by the charge control structure throughout the exposure time such that substantially no portion of the pixel photo response curve is substantially linear.
11. The camera as in item 10, wherein multiplying each pixel by a substantially constant value compensates variations of the charge capacity.
12. The camera as in item 10, wherein the charge capacity control structure is pulsed so as to substantially reproduce the photo response curve.
13. The camera as in item 11, wherein the charge capacity control structure is pulsed so as to substantially reproduce the photo response curve.
14. The camera as in item 11, wherein a look up table is used to translate the photo response curve into linear space for color filter processing.
15. The camera as in item 11, wherein multiplying gain change values are stored in a digital camera.
16. The camera as in item 10, wherein the capacity control structure is adjusted to produce the desired photo response curve substantially entirely within the duration of a flash lamp exposure.
17. The camera as in item 10, wherein the image sensor is disposed in a digital camera that includes a mechanism to switch between linear and nonlinear photo response.
18. The camera as in item 10, wherein the image sensor is an interline CCD in which images are substantially read out of a vertical CCD before starting the integration in photodiodes of any next images.

### PARTS LIST

- 100: image sensor
- 105: photodiodes
- 110: CCD shift register
- 115: horizontal CCD
- 120: charge sensing node
- 125: transfer region
- 200: vertical CCD n-type channel
- 205: p-well
- 210: n-type silicon substrate
- 215: p-type vertical overflow drain
- 220: polysilicon gates
- 225: light shield
- 230: pining layer
- 300: photo-generated electrons
- 310: holes (positive charge carriers)
- 600: image sensor
- 610: digital camera
- 620: illumination unit

- A: curve
- B: curve
- C: curve
- D: curve
- E: arrow
- F: arrow

## Claims

1. A method for correcting a fixed pattern noise associated with an image sensor having two or more pixels and a charge control structure for changing a charge capacity of the two or more pixels during an integration time, the method comprising:
setting the charge capacity of each pixel to substantially zero at a beginning of an integration time;
changing the charge capacity of each pixels throughout the integration time such that substantially no portion of the pixel photo response curve is substantially linear; and
multiplying each pixel by a constant value determined for that pixel to compensate for variations of the charge capacity.

2. The method as in claim 1, further comprising translating the photo response curves into linear space.

3. The method as in claim 1, further comprising pulsing the charge capacity control structure so as to substantially reproduce the photo response curve.

4. The method as in claim 1, further comprising storing the constant values.
